# EUROPEAN PATENT APPLICATION

(11) **EP 4 425 732 A1**
(43) Date of publication of application: **04.09.2024**
(21) Application number: 23159716.2
(22) Date of filing: 02.03.2023
(51) Int. Cl.: H02J 3/00, H02J 3/14, H02J 3/36

(54) **FAULT RIDE THROUGH SYSTEM FOR POWER NETWORK**

(71) Applicant: Hitachi Energy Ltd, 8050 Zürich (CH)
(72) Inventor: BANDARU, Teja, 517130 Chittoor (IN); K, Vinothkumar, 600128 Chennai (IN); HAFNER, Ying-Jiang, 771 42 Ludvika (SE)
(74) Representative: Zacco Sweden AB

(57) **Abstract**

Embodiments herein provide a Fault Ride Through, FRT, system (100) for controlling power in a power network. The FRT system (100) is operatively coupled to the power network at a point of common coupling, PCC. The FRT system (100) comprises an alternating current, AC, chopper (10) connected in delta configuration in bipole or parallel symmetric monopole HVDC power network. The AC chopper is configured to handle a power imbalance in the bipole or parallel symmetric monopole HVDC power network. The FRT system comprises a transformer (20) with at least three windings in each pole, wherein transformer (20) comprises primary winding being connected an input from the bipole or parallel symmetric monopole HVDC power network through the PCC, a secondary winding being connected to a pole (50/60) of the bipole or parallel symmetric monopole HVDC power network and tertiary winding being connected to AC chopper (10).

Corresponding power compensation module is also disclosed.

## Description

### TECHNICAL FIELD

The present disclosure generally relates to power network. More particularly, it relates to a fault ride through system for a power network.

### BACKGROUND

In general, renewable energy plays a major role in moving towards a carbon-neutral energy system. Renewable energy based power transmission requires changes in how power is transmitted and distributed to have a dynamic, flexible, and stable power network/power grid. A power network such as a High-Voltage Direct Current, HVDC, parallel symmetric monopole or bipole system can offer flexibility, controllability, and resilience required for large-scale integration of renewable energy. Low losses associated with the HVDC system make the HVDC system suitable for massive bulk transmission, enabling trade of renewable resources between countries and regions.

Further, advancement of the HVDC system with a converter technology (especially Voltage Source Converter, VSC) leads to planning and establishment of high power onshore and offshore renewable energy (solar and wind or the like) transmissions. One of the common requirements among such transmissions is a need to dissipation/diversion of excessive renewable power during disturbances such as faults in a Direct Current, DC, line, an inverter Alternating Current, AC, grid, or the like.

In some examples, according to the prior art, AC choppers can be used for dissipating excessive renewable power (i.e., excessive active power). The AC chopper comprises thyristors (in an antiparallel configuration) and resistors. The thyristors can be used as controllable switches to control power dissipation by the resistors of the AC chopper. Considering available voltage and current ratings of the thyristors' in a market, designing of a single AC chopper unit at very high voltage level is not economical. In addition, a stepdown transformer is used to optimize voltage ratings of the AC chopper and parallel units are used to optimize current ratings of the AC chopper. Therefore, the dedicated stepdown transformer is required for connection of the AC chopper at a point of common coupling, PCC of the power network. Since, the AC chopper uses its own transformer and the transformer is required to have a high voltage winding, a unit cost for the AC chopper unit is relatively high.

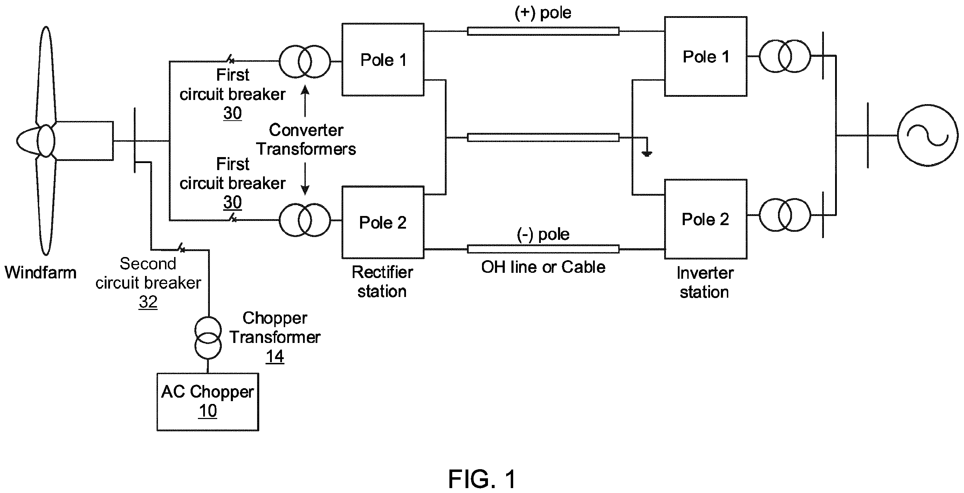

Fig. 1 discloses a schematic diagram of an example of a Fault Ride Through, FRT, system in which a dedicated transformer is provided for Alternating Current, AC, chopper banks, according to the prior art.. As depicted in Fig. 1, the power network can be a bipole or parallel symmetric monopole HVDC system comprising two poles, a pole 1 and a pole 2 at a rectifier station. In the bipole or parallel symmetric monopole HVDC system, a HVDC link is connected to a renewable energy source like a windfarm/wind turbine generator, solar PV or similar at the rectifier station.

The FRT system comprises the AC chopper banks 10. The AC chopper banks 10 are connected at the PCC of the HVDC link through dedicated transformer 14 (referred as chopper transformer). Each AC chopper bank 10 in each pole connected to the chopper transformer 14 may consist of several AC chopper units connected in parallel. The AC chopper banks 10 are designed to operate during disturbances such as faults in a DC line, an inverter AC grid, or the like.

During a DC line fault in any one pole of the HVDC system, the corresponding pole is disconnected/tripped and a converter (half-bridge based) associated with the corresponding pole is blocked. The corresponding pole is disconnected/tripped by opening an AC breaker/circuit breaker, CB, connected between the PCC and a line side/primary winding of the converter transformer of the corresponding pole. Other pole/healthy pole continues to transfer power up to its rated capacity. Excessive power from the renewable source (i.e., above the capacity of the healthy pole) can be dissipated in one of the AC chopper banks 10. Thus, although one of the poles is tripped, the AC chopper banks at the PCC absorb the excessive power from the renewable source.

During short circuit faults in an inverter AC grid, power transfer capacity of an inverter station reduces. Reduced power transfer capacity results in continuous increase of cell capacitor voltages and DC voltage due to constant injection of power at the rectifier station by the renewable source. In order to avoid tripping of the HVDC link triggered by over voltage protection, renewable power in excess of link capacity has to be diverted to the AC chopper bank 10. In order to divert the excessive renewable power, a suitable number of AC chopper units of the AC chopper banks 10 can be activated. With the activation of the chopper units, some or all parts of the power from the renewable source is diverted to the AC chopper banks 10 through the dedicated chopper transformer14. Rest of the power from the renewable source (i.e., renewable power - AC chopper power) is transferred through the HVDC link.

Thus, to fulfill grid code requirements, the AC chopper banks 10 are designed to operate during disturbances such as faults in a DC line, an inverter AC grid, or the like. However, such disturbances/faults are less frequent and may persist for short duration, Thus, utilization of the dedicated chopper transformer14 for the AC chopper banks 10 may be extremely less as compared to the converter transformers. As a result, the chopper transformer become expensive and underutilized, which increases a cost of the AC chopper banks 10.

### SUMMARY

Consequently, there is a need for a Fault Ride Through, FRT, system that eliminates a requirement for dedicated chopper transformer for an AC chopper that alleviates at least some of the above-cited problems.

It is therefore an object of the present disclosure to provide an FRT system for controlling power in a power network, to mitigate, alleviate, or eliminate all or at least some of the above-discussed drawbacks of presently known solutions.

This and other objects are achieved by means of an FRT system and a power compensation module as defined in the appended claims. The term exemplary is in the present context to be understood as serving as an instance, example or illustration.

According to a first aspect of the present disclosure, an FRT system for controlling power in a power network is provided. The FRT system is operatively coupled to the power network at a point of common coupling, PCC. The FRT system comprises an Alternating Current, AC, chopper connected in a delta configuration in a bipole or parallel symmetric monopole HVDC power network, wherein the AC chopper is configured to handle power imbalance in the bipole or parallel symmetric monopole HVDC power network. The FRT system further comprises a transformer with at least three windings. The transformer comprises a primary winding being connected to an input from the bipole or parallel symmetric monopole HVDC power network through the PCC. The transformer comprises a secondary winding being connected to a pole of the bipole or parallel symmetric monopole HVDC power network. The transformer comprises a tertiary winding being connected to the AC chopper. Advantageously, connecting the AC chopper to the tertiary winding of the transformer (i.e., converter transformer) connected between the input and the output of the bipole or parallel symmetric monopole HVDC power network eliminates a requirement for a dedicated transformer for the AC chopper. As there is no additional dedicated transformer for the AC chopper,
- initial capital cost and expenditure cost/footprint associated with the dedicated transformer is reduced;
- maintenance (time and cost) and magnetic core material requirement for the power network may be reduced in contrast to a power control system described in the prior art; and
- magnetizing/inrush currents during energization/startup of a DC link in the bipole or parallel symmetric monopole HVDC power network may be reduced.

Further, as the AC chopper is connected in the delta configuration, the AC chopper may be used in any kind of bipole or parallel symmetric monopole HVDC power network connected to large windfarm, Photovoltaic, PV, source, or any other similar renewable source.

Furthermore, the primary winding of the transformer may be common for power exchange with both the secondary winding and the tertiary winding. Thus, a conductor material requirement may be significantly less in contrast to the power control system of the prior art in which the dedicated transformer is used for the AC chopper.

In addition, the power control system described in the prior art requires spares for both winding voltages of the chopper transformer connected to the AC chopper. In contrast to the prior art, the system described in the present disclosure requires an additional spare only for the tertiary winding of the transformer.

In some embodiments, the transformer comprises the tertiary winding being connected to the AC chopper and an auxiliary supply. Thus, the tertiary winding of the transformer may be used for diverting the power to the AC chopper during disturbances and providing auxiliary power to the station.

In some embodiments, the FRT system further comprises a first circuit breaker, CB, installed between the input to the transformer and the primary winding of the transformer for each of poles in the bipole or parallel symmetric monopole HVDC power network, wherein the first CB is configured to be closed in normal operation of the bipole or parallel symmetric monopole HVDC power network and to be opened while the transformer is disconnected from the circuit.

In some embodiments, the FRT system further comprises a second CB installed between the pole (50/60) of the bipole or parallel symmetric monopole HVDC power network and the secondary winding of the transformer for each of poles in the bipole or parallel symmetric monopole HVDC power network, wherein the second CB is configured to be closed in normal operation of the bipole or parallel symmetric monopole HVDC power network and while the transformer is connected and energized and to be opened in case of occurrence of any fault in the FRT system.

In the prior art, additional circuit breakers, CBs, are used to connect or disconnect chopper transformers (i.e., dedicated transformers) connected to the AC choppers. In contrast to the prior art, the FRT system described in the present disclose comprises the first and second CBs connected at the primary and secondary windings of the transformer that is connected between the input and the output of the bipole or parallel symmetric monopole HVDC power network. Upon occurrence of any fault, the second CB may perform the similar functionality of the CBs of the prior art to isolate the pole of the bipole or parallel symmetric monopole HVDC power network and ensure availability of the AC chopper for diverting the excessive power. Thus, handling power imbalance efficiently in the bipole or parallel symmetric monopole HVDC power network without using the dedicated transformers for the AC choppers.

In some embodiments, the AC chopper is further configured to absorb excessive active power in the bipole or parallel symmetric monopole HVDC power network in case of occurrence of any fault. Thereby, the power imbalance may be handled.

In some embodiments, a part of the power input from the bipole or parallel symmetric monopole HVDC power network is divided into AC chopper power and pole power. The AC chopper power is diverted to the AC chopper via the primary winding and the tertiary winding of the transformer. The pole power is diverted to the pole (50/60) of the bipole or parallel symmetric monopole HVDC power network via the primary winding and the secondary winding of the transformer. Thereby, the excessive renewable power/active power (i.e., the AC chopper power) may be absorbed/dissipated by the AC chopper. Dissipation of the excessive active power avoids tripping of the DC link, which may be triggered by continuous increase of cell capacitor voltages and DC voltage due to occurrence of any fault in the bipole or parallel symmetric monopole HVDC power network.

In some embodiments, the primary winding of the transformer carries total power, which is a sum of the AC chopper and the pole power.

In some embodiments, the bipole or parallel symmetric monopole HVDC power network is a High Voltage Direct Current, HVDC, system.

According to a second aspect of the present disclosure, a power compensation module is provided. The power compensation module is operatively coupled to a power network at a point of common coupling, PCC. The power compensation module comprises an Alternating Current, AC, chopper connected in a delta configuration in a bipole or parallel symmetric monopole HVDC power network, wherein the AC chopper is configured to handle any power imbalance in the bipole or parallel symmetric monopole HVDC power network. The power compensation module further comprises a transformer with at least three windings. The transformer comprises a primary winding being connected to an input from the bipole or parallel symmetric monopole HVDC network through the PCC. The transformer comprises a secondary winding being connected to a pole (50/60) of the bipolar power network. The transformer comprises a tertiary winding being connected to the AC chopper. The power compensation module is configured to absorb AC power in the bipole or parallel symmetric monopole HVDC power network.

Advantageously, connecting the AC chopper to the tertiary winding of the transformer connected between the input and the output of the bipole or parallel symmetric monopole HVDC power network eliminates a requirement of a separate stepdown transformer/chopper transformer for the AC chopper. As a result, a capital expenditure, CAPEX, cost associated with the chopper transformer may be reduced.

In some embodiments, any of the above aspects may additionally have features identical with or corresponding to any of the various features as explained above for any of the other aspects.

Other advantages may be readily apparent to one having skill in the art. Certain embodiments may have some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
- Fig. 1: discloses a schematic diagram of an example power control system in which a dedicated transformer is provided for Alternating Current, AC, chopper banks, according to the prior art;
- Figs. 2A: and 2B disclose a circuit diagram of an example FRT system according to some embodiments;
- Fig. 3: discloses a delta configured AC chopper of a FRT system according to some embodiments; and
- Fig. 4: discloses a power compensation module of a FRT system according to some embodiments.

### DETAILED DESCRIPTION

Aspects of the present disclosure will be described more fully hereinafter with reference to the accompanying drawings. The apparatus and methods disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

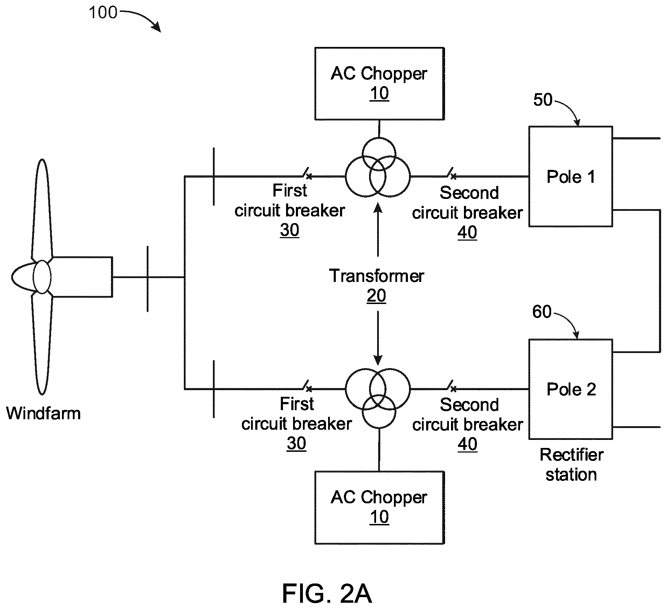

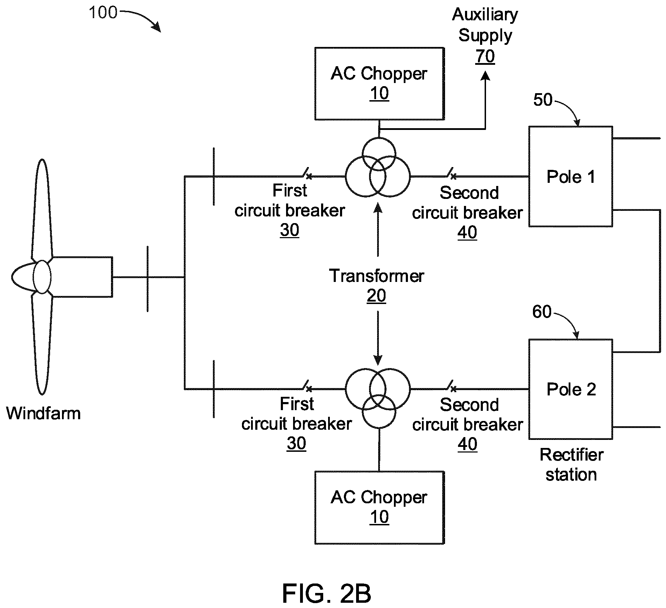

Figs. 2A and 2B disclose a circuit diagram of an example FRT system 100. The FRT system 100 referred herein is operatively coupled to a power network. The power network may be connected to renewable sources such as large windfarm, photovoltaic, PV, sources, or the like, for supporting high power onshore and offshore renewable energy transmissions. One of the common requirements among the high power onshore and offshore renewable energy transmissions is a need to absorb/dissipate excessive power present in the power network during disturbances such as faults in a Direct Current, DC, line, an inverter Alternating Current, AC, grid, or the like.

According to the prior art, as disclosed in Fig 1, the power control system comprises AC choppers, which are connected to a point of common coupling, PCC, of the power network through dedicated chopper transformers and circuit breakers. The AC choppers can be operated during disturbances/faults in the power network to absorb excessive renewable power/active power. However, occurrence of such disturbances/faults may be less frequent and may persist for short duration. Hence, utilization of the chopper transformers is extremely less. As a result, the chopper transformers become expensive and underutilized transformers, which increases a cost of the AC chopper.

In contrast to the prior art, embodiments disclosed herein provide the FRT system 100 for controlling power in the power network by eliminating a requirement for a dedicated chopper transformer for the AC chopper.

The FRT system 100 is operatively coupled to the power network at a point of common coupling, PCC for controlling power. In some examples, as depicted in Figs. 2A and 2B, the power network may include a bipole or parallel symmetric monopole HVDC power network with two links/poles (pole 1 and pole 2). Example of the bipole or parallel symmetric monopole HVDC power network may be a High Voltage Direct Current, HVDC, system. The HVDC system uses Direct Current, DC, for transmission of bulk power over long distances, in contrast to High-Voltage Alternating Current, HVAC, system that operates on Alternating Current, AC. In some examples, a DC link/HVDC link of the bipole or parallel symmetric monopole HVDC power network/HVDC system may be connected to at least one renewable source at a rectifier station for supporting high power onshore and offshore renewable energy transmissions. Examples of the renewable source may include, but are not limited to, large windfarms/wind turbine generators, photovoltaic, PV, sources, and so on. For simplicity, the DC link/HVDC link of the bipole or parallel symmetric monopole HVDC power network/HVDC system connected to a windfarm at the rectifier station is depicted in Figs. 2A and 2B. In some examples, the windfarm or any type of energy source may be connected to the DC link/HVDC link of the bipole or parallel symmetric monopole HVDC power network directly or through a power electronics converter.

As depicted in Figs. 2A and 2B, at each pole of the bipole or parallel symmetric monopole HVDC power network, the FRT system 100 comprises an AC chopper bank 10 and a transformer 20 (converter transformer). Although the embodiments described herein may be equally applicable for both the poles 1 and 2, the embodiments herein are described by considering the components of one of the poles 1 and 2.

In some examples, the AC chopper 10 (also be referred to as a crowbar circuit) referred herein may include an AC chopper bank comprising a plurality of AC chopper units connected in parallel.

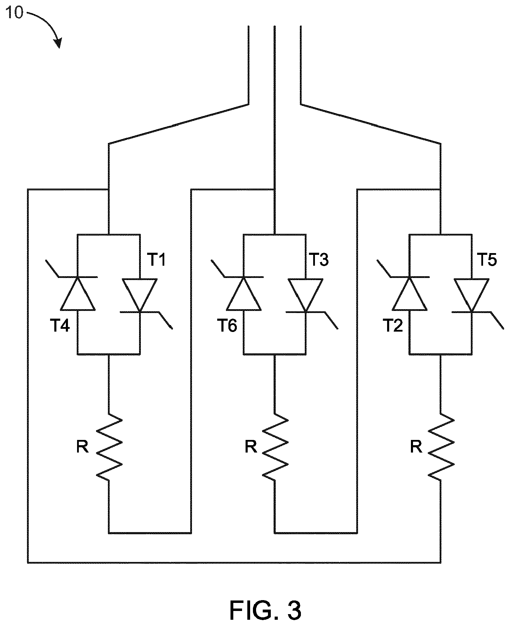

The AC chopper 10 is connected in a delta configuration and is operated during occurrence of any disturbances/faults in the bipole or parallel symmetric monopole HVDC power network. Examples of the faults may include, but are not limited to, a fault in the DC line, a fault in an inverter AC grid, and so on. The AC chopper 10 connected in the delta configuration is configured to handle power imbalance in the bipole or parallel symmetric monopole HVDC power network. The AC chopper 10 may handle power imbalance by dissipating/absorbing excessive power in the bipole or parallel symmetric monopole HVDC power network, which is due to occurrence of any disturbances/faults. The excessive power may be active power. The delta configured AC chopper 10 is described in detail in conjunction with Fig. 3.

The transformer 20 referred herein may be a main converter transformer, which is arranged between an input from the bipole or parallel symmetric monopole HVDC power network through the PCC and an output to the bipole or parallel symmetric monopole HVDC power network. The main converter transformer may be configured to provide auxiliary power.

The transformer 20 comprises at least three windings, a primary winding, a secondary winding, and a tertiary winding.

The primary winding of the transformer 20 (also be referred to as line winding) is connected to the input from the bipole or parallel symmetric monopole HVDC power network through the PCC. In some examples, the primary winding of the transformer 20 may be connected in a star configuration.

The secondary winding of the transformer 20 (also be referred to as valve winding) is connected to the pole of the bipole or parallel symmetric monopole HVDC power network. In some examples, the secondary winding of the transformer 20 may be connected in a delta configuration.

In some embodiments, as depicted in Fig. 2A, the tertiary winding of the transformer 20 (also be referred to as AC chopper winding) is connected to the AC chopper 10. Thus, connecting the AC chopper 10 to the tertiary winding of the transformer 20 (i.e., the main converter transformer) eliminates a need for dedicated chopper transformer for the AC chopper. As there is no additional dedicated chopper transformer for the AC chopper 10, initial capital cost and expenditure cost/footprint associated with the dedicated transformer is reduced. Further, maintenance (time and cost) and magnetic core material requirement for the FRT system 100 may be reduced in contrast to a FRT system described in the prior art.

In some embodiments, as depicted in Fig. 2B, the tertiary winding of the transformer 20 is connected to the AC chopper 10 and an auxiliary supply 70. Thus, the tertiary winding may be used to divert the power the AC chopper 10 during disturbances and providing auxiliary power to the station.

In some examples, as the tertiary winding is provided for auxiliary power, the tertiary winding of the transformer 20 may be connected to reactive power compensation devices or Flexible AC Transmission Systems, FACTs, devices or filters, or the like, along with the AC chopper 10. Examples of the reactive power compensation devices or FACTs devices may be, but are not limited to, Static Synchronous Compensator, STATCOM, Static VAR Compensator, and so on.

In some examples, the tertiary winding of the transformer 20 may be designed in accordance with connection requirements of the AC chopper 10. In some examples the tertiary winding of the transformer 20 may be connected in a delta configuration.

Further, for each of the poles in the bipole or parallel symmetric monopole HVDC power network, the FRT system 100 comprises a first circuit breaker, CB, 30 and a second CB 40. The second CB 40 may also be referred to as a converter bus and indicated as "CBx".

The first CB 30 may be installed between the input to the transformer 20 and the primary winding of the transformer 20. The first CB 30 may be configured to be closed in normal operation of the bipole or parallel symmetric monopole HVDC power network and to be opened while the transformer 20 is disconnected from the circuit. The second CB 40 may be installed between the pole 50/60 of the bipole or parallel symmetric monopole HVDC power network and the secondary winding of the transformer 20. The second CB 40 may be configured to be closed in normal operation of the bipole or parallel symmetric monopole HVDC power network and while the transformer 20 is connected to get energized and to be opened in case of occurrence of any fault in the FRT system 100. In some examples, the second CB 40 may be opened in case of any other desired operation identified by an operator of the FRT system 100.

During power transmission, upon occurrence of any fault (for example, a fault in a DC line, a fault in an inverter AC grid, or the like) in the bipole or parallel symmetric monopole HVDC power network, a part of the power input from the bipole or parallel symmetric monopole HVDC power network is divided into AC chopper power and pole power (also be referred to as HVDC pole power). The AC chopper power is diverted to the AC chopper 10 via the primary winding and the tertiary winding of the transformer 20. The pole power is diverted to the pole of the bipole or parallel symmetric monopole HVDC power network via the primary winding and the secondary winding of the transformer 20. The primary winding of the transformer 20 may carry total power, which is a sum of the AC chopper power and the pole power.

For example, during the disturbance like a short circuit fault in an inverter AC grid, power transfer capacity of an inverter station reduces. As a result, there may be continuous increase of cell capacitor voltages and DC voltage due to constant injection of power at the rectifier station by the renewable sources. Continuous increase of the cell capacitor voltages and the DC voltage may trip the DC line (for example, a HVDC line). In order to prevent tripping of the DC line triggered by over voltage, renewable power/active power excess of link capacity has to be diverted to the AC chopper 10. The renewable power may be diverted by activating the suitable AC chopper 10 or suitable number of AC chopper units of the AC chopper 10 in either the pole 1 or the pole 2 or both. With the activation of the suitable AC chopper 10 or the suitable number of AC chopper units of the AC chopper 10, some part of the renewable power that is the AC chopper power may be diverted to the activated AC chopper 10 through the primary winding to the tertiary winding of the transformer 20. The remaining power that is the pole power may be diverted to the pole (50/60) of the bipole or parallel symmetric monopole HVDC power network through the primary winding to the secondary winding of the transformer 20.. Further, it should be noted that ratings of the tertiary windings of the transformer 20 may not be varied compared to the prior art (as disclosed in Fig. 1), however a direction of the power flow to the AC chopper 10 is modified.

For another example, the disturbance like a DC line fault on one of the poles 1 or 2 affects PCC voltages and hence the other pole. Therefore, as soon as the DC line fault (permanent or temporary) is identified, the second CB of the corresponding faulted pole is opened. Thus, the second CB connected at the secondary winding of the transformer 20 may isolate the faulted pole during the DC line fault. Further, the excessive power present in the bipole or parallel symmetric monopole HVDC power network due to the DC line fault may be diverted to the AC chopper 10 by ensuring availability/activation of the AC chopper 10. The AC chopper 10 absorbs the excessive active power and handles power imbalance in the bipole or parallel symmetric monopole HVDC power network.

Thus, upon occurrence of any fault in the bipole or parallel symmetric monopole HVDC power network, the AC chopper 10 may dissipate/absorb the excessive active power by receiving the AC chopper power via the primary winding and the tertiary winding of the main converter transformer 20 instead of using the dedicated chopper transformer. As a result, a cost of the FRT system is reduced.

Fig. 3 discloses the delta configured AC chopper 10. In the FRT system, the AC chopper 10 is connected to the tertiary winding of the main converter transformer (which is connected between the input and the output of the bipole or parallel symmetric monopole HVDC power network). The AC chopper 10 is configured for handling power imbalance by absorbing excessive active power present in the bipole or parallel symmetric monopole HVDC power network due to occurrence of any fault.

In some embodiments, the AC chopper 10 may comprise controllers forming the delta configuration. Each controller may comprise electronic components connected back to back. For example, as depicted in Fig. 3, the AC chopper 10 comprises three controllers forming the delta configuration, wherein each controller comprises thyristors connected back to back with a resistor. A first controller is formed by thyristors T1 and T4. A second controller is formed by thyristors T3 and T6. A third controller is formed by thyristors T2+T5. It should be understood that the AC chopper 10 may comprise other electronic components including the thyristors.

Thus, the AC chopper 10 connected in the delta configuration may be majorly used in the power network (for example, a HVDC transmission system) connected to renewable sources such as large windfarm, PV sources, or the like.

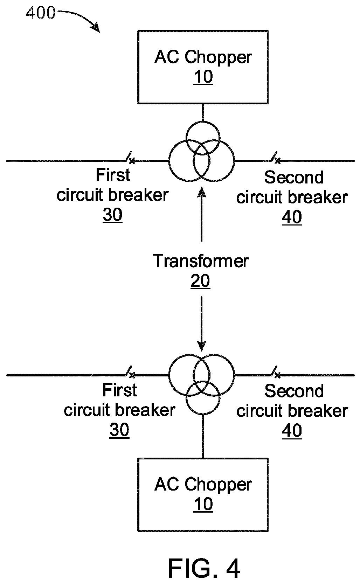

Fig. 4 discloses a power compensation module 400 for controlling power in the power network. The FRT system (as depicted in Fig. 2) may comprise the power compensation module 400. The power compensation module 400 is operatively coupled to the power network at a PCC. In some examples, the power network may be a bipole or parallel symmetric monopole HVDC power network comprising two poles for power transmission. Herein, example of the bipole or parallel symmetric monopole HVDC power network may be a HVDC system. The power compensation module 400 is configured to absorb excess power in the bipole or parallel symmetric monopole HVDC power network.

As depicted in Fig. 4, for each pole of the bipole or parallel symmetric monopole HVDC power network, the power compensation module 400 comprises the AC chopper 10, the transformer 20, the first CB 30, and the second CB 40.

The AC chopper 10 is connected in a delta configuration in the bipole or parallel symmetric monopole HVDC power network and is configured to handle any power imbalance in the bipole or parallel symmetric monopole HVDC power network. The AC chopper 10 may handle power imbalance by absorbing excessive active power present in the bipole or parallel symmetric monopole HVDC power network due to any disturbances such as fault in a DC line, an inverter AC grid, or the like.

The transformer 20 (i.e., the main converter transformer) comprises at least three windings. A primary winding of the transformer 20 is connected to an input from the bipole or parallel symmetric monopole HVDC power network via the PCC. A secondary winding of the transformer 20 is connected to the pole of the bipole or parallel symmetric monopole HVDC power network. A tertiary winding of the transformer 20 is connected to the AC chopper 10. In some embodiments, the tertiary winding of the transformer 20 may also be connected to the AC chopper 10 and the auxiliary supply (as depicted in Fig. 2B).

The first CB 30 is installed between the input of the transformer 20 and the primary winding of the transformer 20 for each of the poles in the bipole or parallel symmetric monopole HVDC power network. The first CB 30 may be configured to be closed in normal operation of the bipole or parallel symmetric monopole HVDC power network and open while the transformer 20 is disconnected from the circuit.

The second CB 40 is installed between the pole of the bipole or parallel symmetric monopole HVDC power network and the secondary winding of the transformer 20 for each of the poles in the bipole or parallel symmetric monopole HVDC power network. The second CB 40 is configured to be closed in normal operation of the bipole or parallel symmetric monopole HVDC power network and while the transformer 20 is connected to get energized and open in case of occurrence of any fault. Thereby isolating the pole of the bipole or parallel symmetric monopole HVDC power network.

Upon occurrence of any disturbances/fault in the bipole or parallel symmetric monopole HVDC power network, whole or a part of power input to the bipole or parallel symmetric monopole HVDC power network may be divided into AC chopper power and pole power. The AC chopper power may be diverted to the AC chopper 10 via the primary winding and the tertiary winding of the transformer 20. The pole power may be diverted to the pole of the bipole or parallel symmetric monopole HVDC power network via the primary winding and the secondary winding of the transformer 20.

Thus, connecting the AC chopper to the tertiary winding of the main converter transformer 20 for handling power imbalance eliminates a requirement of a separate stepdown transformer/chopper transformer for the AC chopper. As a result, a capital expenditure, CAPEX, cost and an operational expenditure, OPEX, cost associated with the chopper transformer may be reduced.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. A Fault Ride Through, FRT, system (100) for controlling power in a power network, the FRT system (100) being operatively coupled to the power network at a point of common coupling, PCC, the FRT system (100) comprising:
an alternating current, AC, chopper (10) connected in a delta configuration in a bipole or parallel symmetric monopole HVDC power network, wherein the AC chopper (10) is configured to handle power imbalance in the bipole or parallel symmetric monopole HVDC power network; and
a transformer (20) with at least three windings, wherein the transformer (20) comprises:
a primary winding being connected to an input from the bipole or parallel symmetric monopole HVDC power network through the PCC,
a secondary winding being connected to a pole (50/60) of the bipole or parallel symmetric monopole HVDC power network, and
a tertiary winding being connected to the AC chopper (10).

2. The FRT system (100) according to claim 1, wherein the transformer (20) comprises the tertiary winding being connected to the AC chopper (10) and an auxiliary supply (70).

3. The FRT system (100) according to claim 1, further comprising a first circuit breaker, CB, (30) installed between the input to the transformer (20) and the primary winding of the transformer (20) for each of poles in the bipole or parallel symmetric monopole HVDC power network, wherein the first CB (30) is configured to be closed in normal operation of the bipole or parallel symmetric monopole HVDC power network and to be opened while the transformer is disconnected from the system.

4. The FRT system (100) according to any of claims 1-3, further comprising a second circuit breaker, CB, (40) installed between the pole (50/60) of the bipole or parallel symmetric monopole HVDC power network and the secondary winding of the transformer (20) for each of poles in the bipole or parallel symmetric monopole HVDC power network, wherein the second CB (40) is configured to be closed while the transformer is connected to get energized in normal operation of the bipole or parallel symmetric monopole HVDC power network and while the transformer (20) is energized and to be opened in case of occurrence of any fault in the FRT system (100).

5. The FRT system (100) according to any of claims 1-4, wherein the AC chopper (10) is further configured to absorb excess active power in the bipole or parallel symmetric monopole HVDC power network in case of occurrence of a fault.

6. The FRT system (100) according to any of claims 1-5, wherein:
a part of the power input from the bipole or parallel symmetric monopole HVDC power network is divided into AC chopper power and pole power,
the AC chopper power is diverted to the AC chopper (10) via the primary winding and the tertiary winding of the transformer (20), and
the pole power is diverted to the pole (50/60) of the bipole or parallel symmetric monopole HVDC power network via the primary winding and the secondary winding of the transformer (20).

7. The FRT system (100) according to any of the preceding claims, wherein the primary winding of the transformer (20) carries total power which is a sum of the AC chopper power and the pole power.

8. The FRT system (100) according to any of the preceding claims, wherein the bipole or parallel symmetric monopole HVDC power network is a high voltage direct current, HVDC, system.

9. A power compensation module (400) being operatively coupled to a power network at a point of common coupling, PCC, the power compensation module (400) comprising:
an alternating current, AC, chopper (10) connected in a delta configuration in a bipole or parallel symmetric monopole HVDC power network, wherein the AC chopper (10) is configured to handle any power imbalance in the bipole or parallel symmetric monopole HVDC power network; and
a transformer (20) with at least three windings, wherein the transformer (20) comprises
a primary winding being connected to an input from the bipole or parallel symmetric monopole HVDC power network via the PCC,
a secondary winding being connected to a pole (50/60) of the bipole or parallel symmetric monopole HVDC power network, and
a tertiary winding being connected to the AC chopper (10);
wherein the power compensation module (400) is configured to control AC power in the bipole or parallel symmetric monopole HVDC power network.

10. The power compensation module (400) according to claim 9, wherein the transformer (20) comprises the tertiary winding being connected to the AC chopper (10) and an auxiliary supply (70).

11. The power compensation module (400) according to any of claims 9-10, further comprising a first circuit breaker, CB, (30) installed between the input of the transformer (20) and the primary winding of the transformer (20) for each of poles in the bipole or parallel symmetric monopole HVDC power network, wherein the first CB (30) is configured to be closed in normal operation of the bipole or parallel symmetric monopole HVDC power network and open while the transformer is disconnected from the system.

12. The power compensation module (400) according to any of claims 9-11, further comprising a second circuit breaker, CB, (40) installed between the pole (50/60) of the bipole or parallel symmetric monopole HVDC power network and the secondary winding of the transformer (20) for each of poles in the bipole or parallel symmetric monopole HVDC power network, wherein the second CB (40) is configured to be closed in normal operation of the bipole or parallel symmetric monopole HVDC power network and while the transformer (20) is connected to get energized and open in case of occurrence of any fault thereby isolating the pole (50/60).

13. The power compensation module (400) according to any of claims 9-12, wherein the AC chopper (10) is further configured to absorb excess active power in the bipole or parallel symmetric monopole HVDC power network due to occurrence of any fault.

14. The power compensation module (400) according to any of claims 9-13, wherein:
a part of power input to the bipole or parallel symmetric monopole HVDC power network is divided into AC chopper power and pole power,
the AC chopper power is diverted to the AC chopper (10) via the primary winding and the tertiary winding of the transformer (20), and
the pole power is diverted to the pole (50/60) of the bipole or parallel symmetric monopole HVDC power network via the primary winding and the secondary winding of the transformer (20).

15. The power compensation module (400) according to the claims 9-14, wherein the primary winding of the transformer (20) carries total power which is a sum of the AC chopper power and the pole power.
